# EUROPÄISCHE PATENTANMELDUNG

(11) **EP 1 445 142 A1**
(43) Veröffentlichungstag der Anmeldung: **11.08.2004**
(21) Anmeldenummer: 03027244.7
(22) Anmeldetag: 28.11.2003
(51) Int. Cl.: B60K 17/346

(54) **Antriebsvorrichtung**

(30) Priorität: 06.02.2003 DE 10304810
(71) Anmelder: AUDI AG, 85045 Ingolstadt (DE)
(72) Erfinder: Meixner, Christian, 85049 Ingoldstadt (DE)
(74) Vertreter: Asch, Konrad

(57) **Zusammenfassung**

Die Erfindung betrifft eine Antriebsvorrichtung für allradgetriebene Kraftfahrzeuge, mit einem Geschwindigkeits-Wechselgetriebe und einem Zwischenachsdifferenzial zur Abtriebsmomentenverteilung auf ein erstes und ein zweites Achsdifferenzial, über die die Vorderräder und die Hinterräder des Kraftfahrzeuges angetrieben werden, wobei eine Antriebswelle des Wechselgetriebes ein Antriebselement des Zwischenachsdifferenziales antreibt und Abtriebselemente des Zwischenachsdifferenziales mit den Achsdifferenzialen trieblich verbunden sind und wobei eine die Abtriebsmomentenverteilung beeinflussende Kupplung vorgesehen ist. Eine stufenlos variable Abtriebsmomentenverteilung weist die folgenden Merkmale auf: - die Auslegung des Zwischenachsdifferenziales ist so, dass unterschiedliche Abtriebsmomente zu den Achsdifferenzialen vorliegen; - zwischen das Antriebselement des Zwischenachsdifferenziales und das mit dem hinteren Achsdifferenzial trieblich verbundene Abtriebselement ist eine schlupfgesteuerte Lamellenkupplung eingeschaltet; - das Antriebselement ist über zwei Übersetzungsstufen an zumindest einer separaten Vorgelegewelle mit einem Element der Lamellenkupplung gekoppelt; und - die Übersetzungsstufen weisen unterschiedliche Übersetzungsverhältnisse auf.

## Beschreibung

Die Erfindung betrifft eine Antriebsvorrichtung für allradgetriebene Kraftfahrzeuge, gemäß dem Oberbegriff des Patentanspruches 1.

Allradantriebe sind in einer Vielzahl von Ausführungen bekannt, beispielsweise als permanenter Allradantrieb, als zuschaltbarer Allradantrieb, z. B. über eine Viskokupplung (Scherreibungskupplung), oder mit Antriebsmomentenverteilung mittels einer oder mehrerer elektrohydraulisch steuerbarer Lamellenkupplungen. Sofern bei solchen Allradantrieben eine Antriebsmomentenverteilung erfolgen soll, sind sie jedoch relativ kompliziert und steuerungstechnisch aufwändig ausgeführt. Ferner sind sie nicht bei vertretbarem Aufwand stufenlos variabel von z. B. hecklastig (Antriebsmoment verstärkt auf der Hinterachse) über neutral auf frontlastig umsteuerbar.

Aufgabe der Erfindung ist es, eine Antriebsvorrichtung der gattungsgemäßen Art vorzuschlagen, die mit relativ geringem baulichen und steuerungstechnischem Aufwand eine stufenlos variable Antriebsmomentenverteilung auf die vorderen und hinteren Räder des Kraftfahrzeuges ermöglicht.

Diese Aufgabe wird erfindungsgemäß mit den kennzeichnenden Merkmalen des Patentanspruchs 1 gelöst. Vorteilhafte Weiterbildungen des erfindungsgemäßen Verfahrens beschreiben die weiteren Patentansprüche.

Die Lösung der gestellten Aufgabe basiert auf den folgenden Merkmalen:
- die Auslegung des Zwischenachsdifferenziales ist so, dass unterschiedliche Abtriebsmomente zu den Achsdifferenzialen vorliegen;
- zwischen das Antriebselement des Zwischenachsdifferenziales und das mit dem hinteren Achsdifferenzial trieblich verbundene Abtriebselement ist eine schlupfgesteuerte Lamellenkupplung eingeschaltet;
- das Antriebselement ist über zwei Übersetzungsstufen an zumindest einer separaten Vorgelegewelle mit einem Element der Lamellenkupplung gekoppelt; und
- die Übersetzungsstufen weisen unterschiedliche Übersetzungsverhältnisse auf.

Durch die beschriebenen Merkmale kann unter Verwendung nur einer schlupfgesteuerten Kupplung stufenlos variabel das Abtriebsmoment vom Zwischenachsdifferenzial zu den Achsdifferenzialen (= Antriebsmoment der Achsen) ausgehend von der konstruktiv vorgegebenen Grundverteilung (z. B. 70:30) in Neutral (50:50) und in eine umgekehrte Lastigkeit (z. B. 30:70 oder mehr) umgesteuert werden. Dabei ist es wesentlich, dass neben der konstruktiv vorgegebenen Momentenverteilung des Zwischenachsdifferenziales durch die unterschiedlichen Übersetzungsverhältnisse der Übersetzungsstufen die Kupplungselemente zueinander unterschiedliche Drehzahlen aufweisen. Dementsprechend kann durch entsprechende Schlupfsteuerung zunehmend Abtriebsmoment über die Lamellenkupplung auf die angekoppelte Antriebswelle übertragen werden und somit die Grundverteilung steuerungstechnisch einfach und schnell in Richtung neutral und umgekehrte Grundverteilung gesteuert werden.

Die schlupfgesteuerte Lamellenkupplung könnte eine Viskokupplung sein, die geschwindigkeitsabhängig die Abtriebsmomentenverteilung beeinflusst. Bevorzugt wird jedoch vorgeschlagen, diese Steuerung abhängig von Betriebsparametern des Kraftfahrzeuges wie beispielsweise Geschwindigkeit, Fahrbahn-Zustand, -Steigungen oder -Gefälle, Schaltzustand des Wechselgetriebes etc. durchzuführen. Die Lamellenkupplung kann dabei in bekannter Weise hydraulisch betätigt und gekühlt sein, wobei entsprechende Steuerventile über ein elektronisches Steuergerät beaufschlagt werden.

Bevorzugt wird ferner vorgeschlagen, dass das höhere Abtriebsmoment auf das die hinteren Räder des Kraftfahrzeuges antreibende Achsdifferenzial geschaltet ist und dass die weitere Übersetzungsstufe dem abtreibenden Element der Lamellenkupplung eine geringere Drehzahl als die der Abtriebswelle aufprägt. Damit ist eine hecklastige Grundverteilung geschaffen, die insbesondere bei sportlich ausgelegten Kraftfahrzeugen fahrdynamische Vorteile bieten kann und die bei Bedarf jederzeit entsprechend variabel auf neutral und frontlastig veränderbar ist.

Das Zwischenachsdifferenzial kann ein unsymmetrisch ausgelegtes Kegelraddifferenzial oder bevorzugt ein hinsichtlich der Abtriebsmomentenverteilung besser beherrschbares und robusteres Planetengetriebe sein.

Eine baulich besonders gedrängte und hinsichtlich der Kombination mit einem herkömmlich allradgetriebenem Kraftfahrzeug eine problemlose Erweiterung zu einem variabel steuerbarem Allradantrieb ergebende Konstruktion ist dadurch gekennzeichnet, dass die Antriebswelle des Wechselgetriebes des Kraftfahrzeuges eine Hohlwelle ist, und das Antriebselement des Zwischenachsdifferenziales antreibt und dass die mit dem Abtriebselement zum vorderen Achsdifferenzial des Kraftfahrzeuges verbundene Abtriebswelle im Rücktrieb durch die hohle Antriebswelle verläuft. Daraus resultiert eine Art Patronenlösung, die ausgehend von einem herkömmlichen Wechselgetriebe des Kraftfahrzeuges mit seitlich angebautem oder im Gehäuse integriertem Vorderachs-Differenzial und einem Zwischenachsdifferenzial nur durch steckbaren Austausch des modifizierten Zwischenachsdifferenziales mit integrierter schlupfgesteuerter Lamellenkupplung einen Allradantrieb mit stufenlos variabler Antriebsmomentenverteilung ermöglicht.

Dabei kann zur Erzielung einer günstigen Abtriebsmomentenverteilung des Zwischenachsdifferenziales das Antriebselement des Planetengetriebes der Planetenradträger sein, während die Abtriebselemente durch das Sonnenrad und das Außenrad gebildet sind.

Die Lamellenkupplung kann auf der der hohlen Antriebswelle abgewandten Seite des Planetengetriebes des Zwischenachsdifferenziales positioniert sein und dementsprechend hinsichtlich der hydraulischen Beaufschlagung und Steuerung sowie der baulichen Anordnung konstruktive Vorteile bzw. eine verbesserte Zugänglichkeit bieten.

Ferner können baulich besonders vorteilhaft die Übersetzungsstufen Zahnradsätze sein, die beiderseits des Planetengetriebes angeordnet sind, wobei das eine mit dem korrespondierenden Zahnrad an der Vorgelegewelle kämmende Zahnrad am Planetenradträger und das andere Zahnrad am Gehäuse der Lamellenkupplung vorgesehen ist.

Des weiteren ist bevorzugt das Außenrad des Planetengetriebes mit dem höheren Abtriebsmoment mit dem Achsdifferenzial für den Antrieb der hinteren Räder des Kraftfahrzeuges trieblich verbunden, wodurch eine besonders günstige Abtriebsmomentenverteilung innerhalb des Zwischenachsdifferenziales bei baulich einfacher Gestaltung und Anordnung des betreffenden Planetengetriebes vorliegt.

Alternativ kann das Planetengetriebe ein Doppelplanetengetriebe sein, dessen radial innenliegende Planetenräder mit dem Sonnenrad und dessen außenliegende Planetenräder mit dem Außenrad kämmen, wobei zudem das Außenrad das Antriebselement bildet und das Abtriebselement zum hinteren Achsdifferenzial der Planetenradträger ist. Damit lässt sich bei relativ geringem Mehraufwand eine noch stärker differierende Grundverteilung des Abtriebsmomentes herstellen, die die Gesamtverstellbarkeit des Allradantriebes vorteilhaft zur noch besseren Anpassung an fahrdynamische Erfordernisse des Kraftfahrzeuges erweitert.

Anstelle einer Vorlegewelle mit entsprechenden Übersetzungsstufen können beispielsweise zur Übertragung höherer Kupplungsmomente und zur Erzielung einer kompakteren Bauweise des Zwischenachsdifferenziales mehrere einander unmittelbar benachbarte und umfangsversetzte Übersetzungsstufen mit jeweils einer Vorgelegewelle um die mit diesen kämmenden Zahnrädern herum vorgesehen sein, vorzugsweise in der Art eines Planetengetriebes als Standgetriebe.

Des weiteren können die mehreren Übersetzungsstufen mit Vorgelegewellen baulich zwischen der Lamellenkupplung und dem Planetengetriebe ähnlich Planetenradanordnungen mit geringem Außenumfang ausgeführt sein und somit eine baulich integrierte Einheit mit dem Planetengetriebe und der Lamellenkupplung bilden.

Bei entsprechenden steuerungstechnischen Maßnahmen z. B. über ein elektronisches Steuergerät und eine elektrohydraulische Steuerung der Lamellenkupplung kann diese abhängig von Betriebsparametern und/ oder Fahrdynamikparametern so schlupfgesteuert sein, dass das Abtriebsmoment des Zwischenachsdifferenziales stufenlos von der konstruktiv vorgegebenen Abtriebsmomentenverteilung mit Vorrang zum einen Achsdifferenzial über eine neutrale Verteilung in eine Abtriebsmomentenverteilung mit Vorrang zum anderen Achsdifferenzial verstellbar ist.

Dabei können bevorzugt die Betriebsparameter mehrere elektronisch abgelegte Fahrprogramme eines automatischen Geschwindigkeits-Wechselgetriebes des Kraftfahrzeuges sein, bei deren Vorwählen unterschiedliche Abtriebsmomentenverteilungen des Zwischenachsdifferenziales durch entsprechende Ansteuerung der Lamellenkupplung vorgegeben sind. So kann beispielsweise bei einem Winterprogramm grundsätzlich mehr Antriebsmoment zu den Vorderrädern des Kraftfahrzeuges und bei einem Sportprogramm mehr Antriebsmoment zu den Hinterrädern gesteuert sein.

Des weiteren können besonders vorteilhaft modifizierte Fahrdynamik-Parameter in einem Steuergerät eines elektronischen Fahrstabilitätsprogrammes des Kraftfahrzeuges abgelegt sein und neben den bekannten Eingriffen wie Bremseneingriff und Antriebsmomentverringerung der Antriebsmaschine durch entsprechende zusätzliche Ansteuerung der Lamellenkupplung die Abtriebsmomentenverteilung des Zwischenachsdifferenziales in Richtung neutral und darüber hinaus verändern.

Ein Ausführungsbeispiel der Erfindung ist im Folgenden mit weiteren Einzelheiten näher beschrieben.

Die anliegende schematische Zeichnung zeigt in:
- **Fig. 1**: ein Blockschaltbild einer Antriebsvorrichtung für ein allradgetriebenes Kraftfahrzeug, mit einem Geschwindigkeits-Wechselgetriebe mit integriertem vorderen Achsdifferenzial, einem Zwischenachsdifferenzial und einem hinteren Achsdifferenzial;
- **Fig. 2**: das Zwischenachsdifferenzial gemäß Fig. 1 mit einem einfachen Planetengetriebe und einer schlupfgesteuerten Lamellenkupplung; und
- **Fig. 3**: ein weiteres Zwischenachsdifferenzial gemäß Fig. 1 jedoch mit einem Doppelplanetengetriebe.

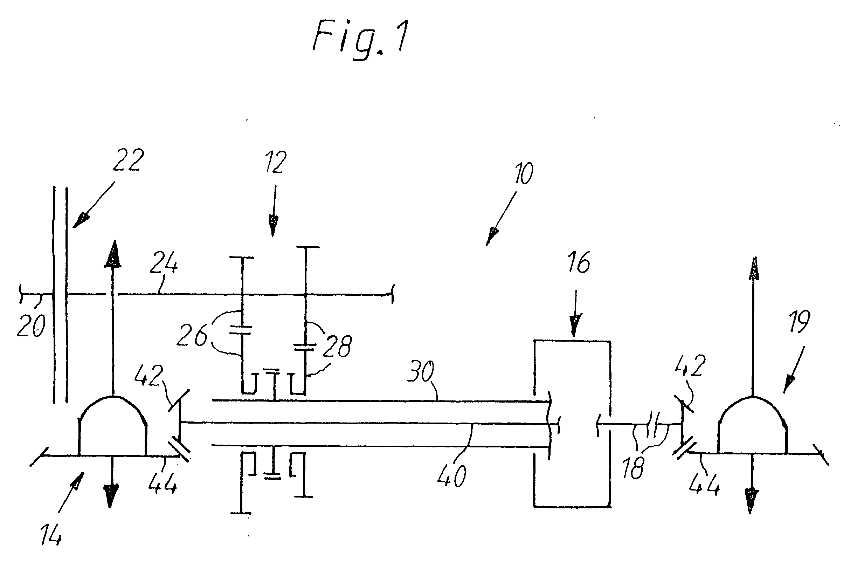

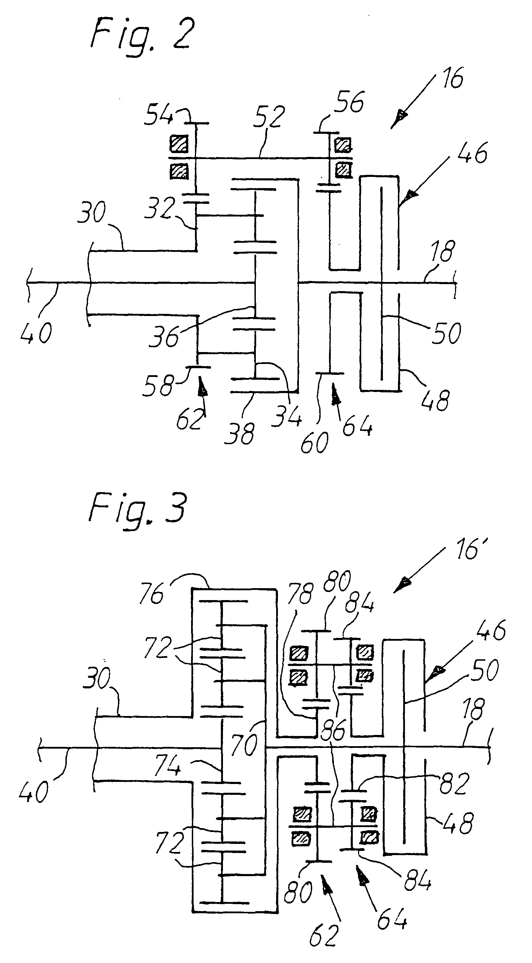

In der **Fig. 1** ist mit 10 die Antriebsvorrichtung für einen Allradantrieb für Kraftfahrzeuge bezeichnet, mit einem nur teilweise dargestellten Geschwindigkeits-Wechselgetriebe 12 mit einem integrierten Achsdifferenzial 14 zum Antrieb der vorderen Räder des Kraftfahrzeuges, einem ebenfalls integrierten Zwischenachsdifferenzial 16 (vgl. im Detail **Fig. 2 und 3**) und einer Abtriebswelle 18 (z. B. eine Kardanwelle), die trieblich mit einem die hinteren Räder des Kraftfahrzeuges antreibenden Achsdifferenzial 19 verbunden ist.

Der Antriebsfluss verläuft von einer antreibenden Brennkraftmaschine mit einer Kraftabgabewelle 20 über eine Trennkupplung 22 auf die Getriebe-Eingangswelle 24 und über die nur teilweise dargestellten Gangstufen 26 oder 28 auf eine hohle Antriebswelle 30. Das Wechselgetriebe 12 kann im übrigen ein von einer Brennkraftmaschine angetriebenes Schaltgetriebe, ein automatisches Stufengetriebe oder ein automatisches stufenloses Getriebe sein.

Die Antriebswelle 30 treibt das Zwischenachsdifferenzial 16 in noch zu beschreibender Weise an, während dessen Abtriebswellen 18, 40 über entsprechende Antriebsritzel 42 und Tellerräder 44 die besagten Achsdifferenziale 14, 19 treiben.

Die Achsdifferenziale 14 und 19 sind heißt, dass bei schlupffreiem Abrollen der Vorderräder und Hinterräder des Kraftfahrzeuges (nicht dargestellt) die Abtriebswellen 18, 40 mit gleicher Drehzahl umlaufen.

In der **Fig. 2** ist ein erstes Zwischenachsdifferenzial 16 als Teil der in der Fig. 1 beschriebenen Antriebsvorrichtung 10 dargestellt, das in einem entsprechenden Gehäuse (nicht dargestellt) angeordnet und drehbar gelagert ist und das z. B. in das Geschwindigkeits-Wechselgetriebe 12 integriert oder an dieses angebaut ist.

Das Zwischenachsdifferenzial 16 weist ein einfaches Planetengetriebe mit einem Planetenradträger 32 auf, der über die auf Drehachsen des Planetenradträgers gelagerten Planetenräder 34 mit den Abtriebselementen bzw. dem Sonnenrad 36 und dem Außenrad 38 trieblich verbunden ist.

Dabei sitzt das Sonnenrad 36 auf der Abtriebswelle 40 zu dem vorderen Achsdifferenzial 14 und das Außenrad 38 treibt die Abtriebswelle 18 zum hinteren Achsdifferenzial 19 an.

Ferner ist die hohle Antriebswelle 30 drehfest mit dem Planetenradträger 32 verbunden.

Die Antriebswelle 30 und die Abtriebswelle 40 sind mit nicht dargestellten Steckverbindungen versehen, die eine einfache Montage an den trieblichen Einrichtungen des Wechselgetriebes 12 ermöglichen, so dass gegebenenfalls problemlos unterschiedliche Zwischenachsdifferenziale 16 montierbar sind (sogenannte Patronenlösung).

In dem nicht dargestellten Gehäuse des Zwischenachsdifferenziales 16 ist ferner eine Vorgelegewelle 52 drehbar gelagert, die zwei Zahnräder 54, 56 trägt, wobei die Zahnräder 54, 56 mit Zahnrädern 58, 60 zwei Übersetzungsstufen 62, 64 bilden.

Dabei sitzt das Zahnrad 58 der ersten Übersetzungsstufe 62 auf dem Planetenradträger 32, während das Zahnrad 60 der zweiten Übersetzungsstufe 64 baulich mit dem Gehäuse 48 einer schlupfgesteuerten Lamellenkupplung 46 vereint ist.

Die Kupplungslamellen 50 (es ist nur eine Kupplungslamelle 50 gezeigt) sind drehfest mit der Abtriebswelle 18 bzw. mit dem Außenrad 38 als Abtriebselement des Planetengetriebes drehfest verbunden.

Die Lamellenkupplung 46 ist wie ersichtlich gegenüber der hohlen Antriebswelle 30 benachbart dem Planetengetriebe positioniert, während die beiden Übersetzungsstufen 62, 64 beiderseits des Planetengetriebes angeordnet sind.

Die Auslegung des Zwischenachsdifferenziales 16 bzw. dessen Planetengetriebes ist so, dass in der konstruktiven Grundverteilung auf die Abtriebswelle 18 zu dem hinteren Achsdifferenzial 19 ein höheres Abtriebsmoment (70%) und auf die Abtriebswelle 40 zum vorderen Achsdifferenzial 14 ein niedrigeres Abtriebsmoment (30%) abgetrieben wird.

Ferner sind die Übersetzungsverhältnisse der Übersetzungsstufen 62, 64 derart geringfügig ungleich, dass bei einem angenommenen Gleichlauf der Abtriebswellen 18, 40 und der Antriebswelle 30 in der Lamellenkupplung 46 eine Drehzahldifferenz vorherrscht bzw. dass das Gehäuse 48 als das eine Kupplungselement langsamer dreht als die mit der Abtriebswelle 18 gekoppelten Kupplungslamellen 50.

Die Lamellenkupplung 46 ist in nicht dargestellter und für sich bekannter Weise elektrohydraulisch (oder elektrisch) schlupfgesteuert betätigt und bewirkt eine stufenlos variable Veränderung der vorgegebenen Abtriebsmomentenverteilung des Zwischenachsdifferenziales 16.

Bei voll geöffneter Lamellenkupplung 46 ist diese ohne Einfluss und das Abtriebsmoment des Zwischenachsdifferenziales 16 ist wie vorgenannt mit Vorrang auf die hinteren Räder des Kraftfahrzeuges. Die Abtriebsübersetzungen im Abtrieb zu den vorderen und hinteren Rädern des Kraftfahrzeuges sind so, dass sich die Abtriebselemente 36, 38 des Planetengetriebes 1:1 drehen, also mit gleicher Drehzahl. Aufgrund der unterschiedlichen Übersetzungsverhältnisse an den beiden Übersetzungsstufen 62, 64 bzw. aufgrund des höheren Übersetzungsverhältnisses der Übersetzungsstufe 64 dreht das Gehäuse 48 der Lamellenkupplung 46 langsamer als die mit der Abtriebswelle 18 umlaufenden Kupplungslamellen 50.

Soll die Abtriebsmomentenverteilung des Zwischenachsdifferenziales 16 aufgrund definierter, noch zu beschreibender Betriebsparameter des Kraftfahrzeuges von der hecklastigen Grundverteilung von z. B. 70:30 auf neutral (50:50) oder auf frontlastig (z. B. 30:70) stufenlos verändert werden, so wird die Lamellenkupplung 46 zunehmend (aber stets im Schlupfbereich) geschlossen, wodurch aufgrund der vorliegenden Drehzahldifferenz Abtriebsmoment zunehmend von der Abtriebswelle 18 über die Vorgelegewelle 52 und den Planetenträger 32 auf die Abtriebswelle 40 übertragen wird.

Die Schlupfsteuerung oder Schlupfregelung der Lamellenkupplung 46 erfolgt über ein nicht dargestelltes elektronisches Steuergerät, welches abhängig von Betriebs- und Fahrdynamik-Parametern den Kupplungsschlupf zur variablen Veränderung der Abtriebsmomente des Zwischenachsdifferenziales 16 steuert, wobei das Steuergerät eine entsprechende hydraulische Betätigungseinrichtung mit einer Druckmittelquelle und einem Stellzylinder ansteuert.

Das Steuergerät wertet dabei u. a. sowohl Signale von einem Fahrprogramm-Wählschalter des Wechselgetriebes als auch Signale von einem Steuergerät eines Fahrstabilitätsprogrammes des Kraftfahrzeuges derart aus, dass bei einem Einlegen eines Sportprogrammes des ggf. automatischen Wechselgetriebes 12 eine größere Hecklastigkeit des Allradantriebs (geringerer Schlupfeingriff der Lamellenkupplung 46) vorliegt als beispielsweise bei einem Winterprogramm mit entsprechend angenommener vorsichtigerer Fahrweise bei mehr neutraler Momentenverteilung.

Neben dem Bremseneingriff und/oder einer Antriebsmomentenreduzierung an der Brennkraftmaschine kann das Fahrstabilitätsprogramm bzw. dessen Steuergerät ebenfalls in die Schlupfsteuerung der Lamellenkupplung 46 eingreifen und bei beginnender Instabilität des Kraftfahrzeuges (erkennbar z. B. über einen Gierwinkelsensor des Fahrstabilitätsprogrammes) die Abtriebsmomentenverteilung des Zwischenachsdifferenziales 16 in Richtung neutral schnell und wirkungsvoll verändern.

Gleiches gilt auch für Fahrbahnbeschaffenheiten, Fahrgeschwindigkeit, Brems- und/oder Beschleunigungszustände, etc. des Kraftfahrzeuges.

Bei dem Zwischenachsdifferenzial 16' gemäß **Fig. 3** ist anstelle des einfachen Planetengetriebes ein Doppelplanetengetriebe wie folgt verwendet. Funktionell gleiche Teile sind mit gleichen Bezugszeichen versehen.

Dabei ist die Abtriebswelle 18 für den Antrieb des hinteren Achsdifferenziales 19 mit dem Planetenträger 70 als dem einen Abtriebselement des Doppelplanetengetriebes trieblich verbunden, während das andere Abtriebselement unverändert durch das Sonnenrad 74 gebildet ist, das mit der Abtriebswelle 40 zum vorderen Achsdifferenzial 14 verbunden ist. Die hohle Antriebswelle 30 schließlich treibt das Außenrad 76 als Antriebselement des Doppelplanetengetriebes an.

Der Planetenradträger 70 trägt auf entsprechenden Drehzapfen radial zueinander versetzte und miteinander kämmende Planetenräder 72, von denen die radial innenliegenden Planetenräder 72 mit dem Sonnenrad 74 und die radial außenliegenden Planetenräder 72 mit dem antreibenden Außenrad 76 kämmen.

Das Außenrad 76 trägt ferner auf der der hohlen Abtriebswelle 30 gegenüberliegenden Seite und koaxial zur Abtriebswelle 18 ein Zahnrad 78, das mit mehreren ähnlich Planetenrädern um das Zahnrad 78 herum angeordneten Zahnrädern 80 der ersten Übersetzungsstufe 62 kämmt.

Benachbart der ersten Übersetzungsstufe 62 ist die zweite Übersetzungsstufe 64 mit einem zentrischen Zahnrad 82 und umfangsversetzten Zahnrädern 84 angeordnet, wobei das Zahnrad 82 wiederum fest mit dem angrenzenden Gehäuse 48 der Lamellenkupplung 46 verbunden ist, deren Kupplungslamellen 50 an die Abtriebswelle 18 gekoppelt sind.

Ferner sind die Zahnräder 80 bzw. 84 über im nicht dargestellten Gehäuse des Zwischenachsdifferenziales 16' drehbar gelagerte Wellenstummel 86 drehfest miteinander verbunden. Die Übersetzungsverhältnisse der Übersetzungsstufen 62, 64 sind wie vorbeschrieben unterschiedlich.

Die beschriebene Konstruktion des Doppelplanetengetriebes ermöglicht eine stärkere Differenz in der Abtriebsmomentenverteilung des Zwischenachsdifferenziales 16' und einen damit beträchtlich erweiterten Verstellbereich des variablen Abtriebsmomentes. Im übrigen ist die Funktion des Zwischenachsdifferenziales 16' im wesentlichen wie vorbeschrieben, indem durch entsprechende Schlupfsteuerung der Lamellenkupplung 46 wiederum Abtriebsmoment von der schneller drehenden Abtriebswelle 18 über den Planetenradträger 70 und das Sonnenrad 74 auf die Abtriebswelle 40 verlagert wird.

Die Erfindung ist nicht auf die beschriebenen Ausführungsbeispiele beschränkt. Beispielsweise kann die Schlupfsteuerung der Lamellenkupplung 46 auch als Differenzialsperre eingesetzt sein, jedoch muss ein Restschlupf an der Lamellenkupplung 46 zur Aufrechterhaltung der vorgegebenen Drehzahldifferenz an der Lamellenkupplung 46 stets sichergestellt sein. Auch sind zur Erziehung einer Drehzahldifferenz in der Lamellenkupplung alle Arten von Planetengetrieben in der Anwendung als Standgetriebe denkbar.

## Patentansprüche

1. Antriebsvorrichtung für allradgetriebene Kraftfahrzeuge, mit einem Geschwindigkeits-Wechselgetriebe und einem Zwischenachsdifferenzial zur Abtriebsmomentenverteilung auf ein erstes und ein zweites Achsdifferenzial, über die die Vorderräder und die Hinterräder des Kraftfahrzeuges angetrieben werden, wobei eine Antriebswelle des Wechselgetriebes ein Antriebselement des Zwischenachsdifferenziales antreibt und Abtriebselemente des Zwischenachsdifferenziales mit den Achsdifferenzialen trieblich verbunden sind und wobei eine die Abtriebsmomentenverteilung beeinflussende Kupplung vorgesehen ist, **gekennzeichnet durch folgende Merkmale**:
- die Auslegung des Zwischenachsdifferenziales (16; 16') ist so, dass unterschiedliche Abtriebsmomente zu den Achsdifferenzialen (14, 19) vorliegen;
- zwischen das Antriebselement (32; 76) des Zwischenachsdifferenziales (16; 16') und das mit dem hinteren Achsdifferenzial (19) trieblich verbundene Abtriebselement (38; 70) ist eine schlupfgesteuerte Lamellenkupplung (46) eingeschaltet;
- das Antriebselement (32; 70) ist über zwei Übersetzungsstufen (62, 64) an zumindest einer separaten Vorgelegewelle (52; 86) mit einem Element (48) der Lamellenkupplung (46) gekoppelt; und
- die Übersetzungsstufen (62, 64) weisen unterschiedliche Übersetzungsverhältnisse auf.

2. Antriebsvorrichtung nach Anspruch 1, **dadurch gekennzeichnet, dass** die Lamellenkupplung (46) abhängig von Betriebsparametern des Kraftfahrzeuges zur variablen Verteilung der Abtriebsmomente des Zwischenachsdifferenziales (16; 16') steuerbar ist.

3. Antriebsvorrichtung nach den Ansprüchen 1 und 2, **dadurch gekennzeichnet, dass** das höhere Abtriebsmoment auf das die hinteren Räder des Kraftfahrzeuges antreibende Achsdifferenzial (19) geschaltet ist und dass die Übersetzungsstufen (62, 64) dem abtreibenden Element (48) der Lamellenkupplung (46) eine geringere Drehzahl als die der Abtriebswelle (18) aufprägt.

4. Antriebsvorrichtung nach den Ansprüchen 1 bis 3, **dadurch gekennzeichnet, dass** das Zwischenachsdifferenzial (16; 16') ein Planetengetriebe ist.

5. Antriebsvorrichtung nach einem oder mehreren der vorhergehenden Ansprüche, **dadurch gekennzeichnet, dass** die Antriebswelle (30) des Wechselgetriebes (12) des Kraftfahrzeuges eine Hohlwelle ist und das Antriebselement (32; 76) des Zwischenachsdifferenziales (16; 16') antreibt und dass die mit dem Abtriebselement (36; 74) zum vorderen Achsdifferenzial (14) des Kraftfahrzeuges verbundene Abtriebswelle (40) im Rücktrieb durch die hohle Antriebswelle (30) verläuft.

6. Antriebsvorrichtung nach einem oder mehreren der Ansprüche 1 bis 5, **dadurch gekennzeichnet, dass** das Antriebselement des Planetengetriebes (16) der Planetenradträger (32) ist und dass die Abtriebselemente durch das Sonnenrad (36) und das Außenrad (38) gebildet sind.

7. Antriebsvorrichtung nach einem oder mehreren der vorhergehenden Ansprüche, **dadurch gekennzeichnet, dass** die Lamellenkupplung (46) auf der der hohlen Antriebswelle (30) abgewandten Seite des Planetengetriebes des Zwischenachsdifferenziales (16; 16') positioniert ist.

8. Antriebsvorrichtung nach einem oder mehreren der Ansprüche 1 bis 7, **dadurch gekennzeichnet, dass** die Übersetzungsstufen (62, 64) Zahnradsätze sind, die beiderseits des Planetengetriebes angeordnet sind, wobei das eine mit dem korrespondierenden Zahnrad (54) an der Vorgelegewelle (52) kämmende Zahnrad (58) am Planetenradträger (32) und das andere Zahnrad (60) am Gehäuse (48) der Lamellenkupplung (46) vorgesehen ist.

9. Antriebsvorrichtung nach einem oder mehreren der Ansprüche 1 bis 8, **dadurch gekennzeichnet, dass** das Außenrad (38) des Planetengetriebes (16) mit dem höheren Abtriebsmoment mit dem Achsdifferenzial (19) für den Antrieb der hinteren Räder des Kraftfahrzeuges trieblich verbunden ist.

10. Antriebsvorrichtung nach einem oder mehreren der vorhergehenden Ansprüche, **dadurch gekennzeichnet, dass** das Planetengetriebe ein Doppelplanetengetriebe (16') ist, dessen radial innenliegende Planetenräder (72) mit dem Sonnenrad (74) und dessen außenliegende Planetenräder (72) mit dem Außenrad (76) kämmen, dass ferner das Außenrad (76) das Antriebselement bildet und dass das Abtriebselement zum hinteren Achsdifferenzial (19) der Planetenradträger (70) ist.

11. Antriebsvorrichtung nach einem oder mehreren der vorhergehenden Ansprüche, **dadurch gekennzeichnet, dass** mehrere einander unmittelbar benachbarte und umfangsversetzte Übersetzungsstufen (62, 64) mit jeweils einer Vorlegewelle (86) um die mit diesen kämmenden Zahnrädern (78, 82) herum vorgesehen sind.

12. Antriebsvorrichtung nach Anspruch 11, **dadurch gekennzeichnet, dass** die mehreren Übersetzungsstufen (62, 64) mit Vorgelegewellen (86) baulich zwischen der Lamellenkupplung (46) und dem Planetengetriebe ähnlich Planetenradanordnungen mit geringem Außenumfang ausgeführt sind.

13. Antriebsvorrichtung nach einem oder mehreren der vorhergehenden Ansprüche, **dadurch gekennzeichnet, dass** die schlupfgesteuerte Lamellenkupplung (46) abhängig von Betriebsparametern und/oder Fahrdynamikparametern so gesteuert ist, dass das Abtriebsmoment des Zwischenachsdifferenziales stufenlos von der konstruktiv vorgegebenen Abtriebsmomentenverteilung mit Vorrang zum einen Achsdifferenzial über eine neutrale Verteilung in eine Abtriebsmomentenverteilung mit Vorrang zum anderen Achsdifferenzial verstellbar ist.

14. Antriebsvorrichtung nach einem oder mehreren der vorhergehenden Ansprüche, **dadurch gekennzeichnet, dass** die Betriebsparameter mehrere elektronisch abgelegte Fahrprogramme eines automatischen Geschwindigkeits-Wechselgetriebes des Kraftfahrzeuges sind, bei deren Vorwählen unterschiedliche Abtriebsmomentenverteilungen des Zwischenachsdifferenziales (16; 16') durch entsprechende Ansteuerung der Lamellenkupplung (46) vorgegeben sind.

15. Antriebsvorrichtung nach einem oder mehreren der vorhergehenden Ansprüche, **dadurch gekennzeichnet, dass** die Fahrdynamik-Parameter in einem elektronischen Fahrstabilitätsprogramm des Kraftfahrzeuges abgelegt sind und dass neben den bekannten Eingriffen wie Bremseneingriff und Antriebsmomentverringerung der Antriebsmaschine durch entsprechende zusätzliche Ansteuerung der Lamellenkupplung (46) die Abtriebsmomentenverteilung des Zwischenachsdifferenziales (16; 16') in Richtung neutral und gegebenenfalls darüber hinaus verändert wird.
